Europäisches Patentamt

(19) European Patent Office

Office européen des brevets

(11) Numéro de publication: **0 208 150**
A2

(12) **DEMANDE DE BREVET EUROPEEN**

(21) Numéro de dépôt: **86107764.2**

(22) Date de dépôt: **06.06.86**

(51) Int. Cl.⁴: **G 01 F 13/00**

(30) Priorité: **07.06.85 PL 253876**

(43) Date de publication de la demande:
**14.01.87 Bulletin 87/3**

(84) Etats contractants désignés:
**CH DE FR LI**

(71) Demandeur: **Instytut Energii Atomowej**

**05-400 Otwock-Swierk(PL)**

(72) Inventeur: **Mikós, Michal**
**ul. Pazinskiego 1 b, m 10**
**04-643 Warszawa(PL)**

(74) Mandataire: **Masch, Karl Gerhard et al,**
**Patentanwälte Andrejewski, Honke & Partner**
**Theaterplatz 3 Postfach 10 02 54**
**D-4300 Essen 1(DE)**

(54) **Doseur de poudres.**

(57) L'invention a pour objet le dosage précis de poudres à granulation de 5 à 60 μm appliquées au processus de revêtement à plasma.

Le doseur selon l'invention se compose essentiellement d'un récipient (1) établi sous forme d'une chambre (2) de débit, cylindrique achevée en bas sous forme d'une chambre conique (4) de débit, équipée à l'entrée d'une grille (3) et à la sortie d'un diaphragme conique (7) voilant partiellement la sortie de la chambre de débit (4).Sous le récipient (1), on a prévu un second récipient (8) soumis à des mouvements vibratoires, cedit récipient (8) formant autour du diaphragme conique (7) une chambre d'ameublissement (9) communiquant par l'intermédiaire d'une piste (10) avec un cylindre vertical (12), dont la sortie est située au-dessus d'un évidement conique (15) aménagé dans la sole tournante (14) montée sur palier à roulement selon l'axe du recipient (1). A une certaine distance du cylindre (12) est monté un racleur (16) d'écoulement de la poudre dirigée à l'évidment (15) annulaire provoquant le transport ultérieur de la poudre vers un dispositif de revêtement à plasma, au moyen d'un flux d'écoulement de gaz.

Fig. 1.

Croydon Printing Company Ltd

Doseur de poudres

**0208150**

L'invention a pour objet un doseur de poudres coopérant avec un dispositif technique à flux de gaz ionisé par un arc électrique à courant continu destiné à poser un revêtement à composants multiples par voie de projection au pistolet à plasma, où le débit de poudres à granulation de 5 à 60 /um/micromètres/ implique le besoin du contrôle de l'écoulement.

Le problème du dosage des poudres de métaux et de leurs composants chimiques, lors du processus de projection au pistolet à plasma, pose de nombreuses difficultés pour maintenir l'écoulement consigné de leurs masses par unité de temps envers le flux de plasma. Cette difficulté est encore accrue du fait que les poudres commerciales sont peu fluantes /poudres non sphériques et poudres très fines/.

On connait déjà un dispositif d'alimentation en poudres du type Twin-10 compact, illustré dans la notice de la société dite Plasma-Technik AG /Suisse/, qui comporte un récipient sous forme d'un cône inversé, à la sortie duquel se trouve un diaphragme tournant conique dont le sommet est dirigé vers le haut, formant à la sortie du récipient une lumière annulaire, réglable par un mouvement axial du diaphragme. Sur la surface conique du diaphragme, en dessous de la lumière annulaire, on a prévu des barres emplacées perpendiculairement envers l'axe longitudinal du diaphragme, destinées à disperser les masses de poudres en chutte. Sous le récipient on a prévu une chambre conique terminée par un entonnoir sous lequel est disposée une sole tournante contre laquelle prend appui d'une manière glissante un plateau fixe dans la partie supérieure,qui présente en dessous un segment annulaire d'évidement ayant à une extrémité un orifice d'admission et à l'autre un orifice d'éjection de la poudre.

Le fonctionnement de ce dispositif d'alimentation en poudres est le suivant:

La poudre du récipient s'écoule à travers une lumière annulaire sur la surface conique d'un diaphragme,où la masse de poudre tombée subit une pulvérisation sur des barres,tombant ensuite dans une chambre conique d'où elle est évacuée à travers un entonnoir par une sole tournante en remplissant un évidement annulaire aménagé dans un plateau fixe.Grâce à la sole tournante,la poudre est entraînée le long de l'évidement annulaire vers un orifice d'éjection aménagé dans le plateau fixe d'où elle est entraînée par un diffuseur vers le dispositif technique à flux de gaz ionisé par un arc électrique.

Ce dispositif d'alimentation présente une construction simple,mais il n'est pas apte à assurer un dosage convenable en poudres à petite fluidité,notamment de poudres fines à granulation inférieure à 15 um. Dans la partie inférieure de ce dispositif la poudre est soumise à l'effet de compactage,donc ce fait le dosage de la poudre est irrégulier.

L'invention se propose l'obtention d'un débit régulier en poudres,notamment en poudres fines et à faible fluidité,pour alimenter un dispositif technique à flux de

- 3 -

0208150

gaz ionisé par un arc électrique appliqué dans le procédé de revêtement au moyen d'un flux de plasma.

De ce fait,on a prévu sous le récipient de poudre un autre récipient mis en mouvement vibratoire,constituant une chambre annulaire d'ameublissement,entourant un diaphragme conique à la sortie,à partir de la chambre de débit du dispositif d'alimentation,cette chambre d'ameublissement étant reliée par une piste grimpante à faible angle d'inclinaison à un cylindre vertical dont la sortie est située directement au-dessus d'un évidement annulaire se trouvant dans la sole tournante située en-dessous du récipient vibrant.A une certaine distance du cylindre,on a prévu un racleur d'écoulement de la poudre,dont la partie inférieure est insérée dans l'évidement annulaire de la sole tournante.Ce racleur d'écoulement de la poudre présente un canal d'entrée de gaz et un canal de sortie du mélange de la poudre avec le gaz,ces canaux étant reliés entre uex par un segment annulaire d'évidement aménagé sur la sole tournante.

Le doseur selon l'invention,à part la simplicité de construction,se caractérise par un dosage précis répétable selon le débit consigné en poudres à granulation de 5 à 60 /um, ce débit étant fonction qu'uniquement du nombre de tours de la sole tournante,grâce à quoi il est possible de faire communiquer le doseur à un système automatique de commande du procédé de revêtement à plasma.

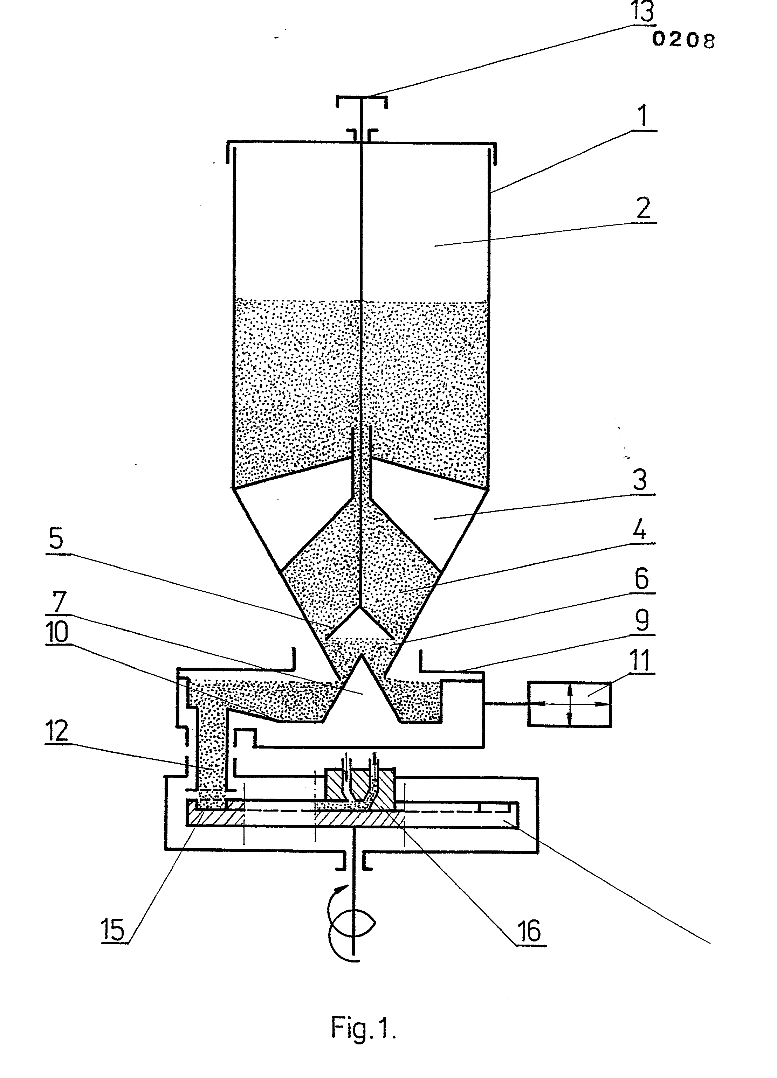

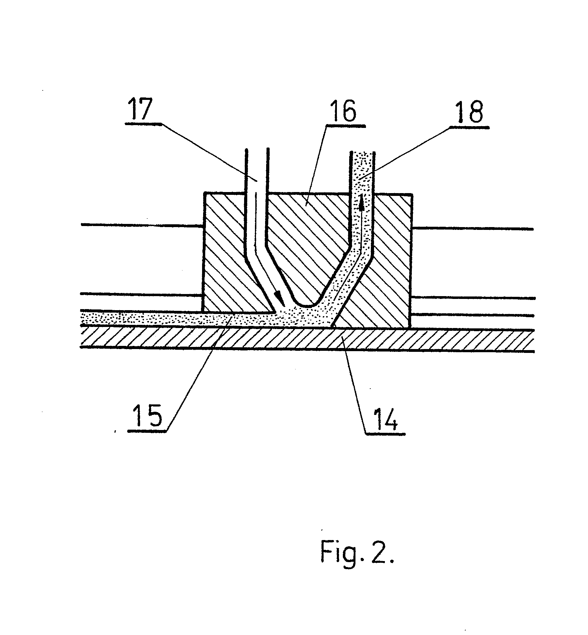

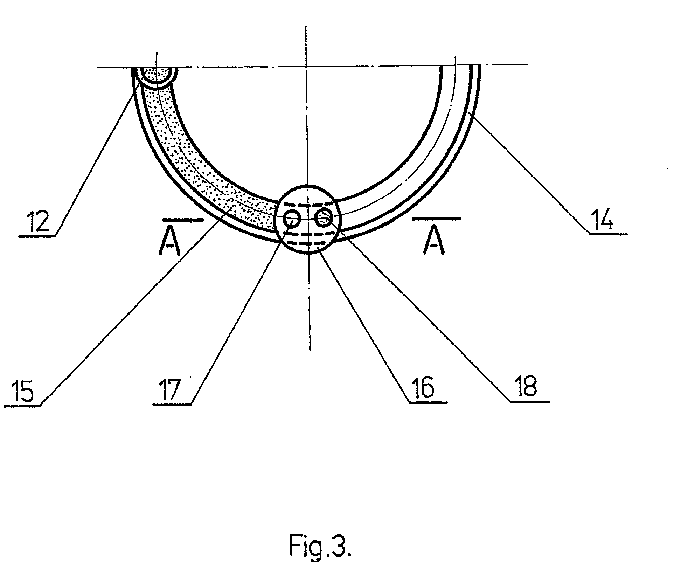

L'objet de l'invention est illutré par l'exemple de réalisation sur le dessin annexé,où la Fig.1 est une

vue d'ensemble du doseur dont un fragment en coupe selon le plan A-A est présenté sur la Fig.3; la Fig.2 est une vue du racleur d'écoulement de la poudre en coupe suivant la ligne A-A de la Fig.3,et la Fig.3 est une vue de la sole tournante en demi-vue d'en haut.

Le récipient 1 comporte une chambre cylindrique d'alimentation 2 terminée en bas par une chambre conique 4 de débit en poudres.Ces deux chambres 2 et 4 sont séparées entre elles par une grille 3 établie sous forme de nervures disposées radialement. A la sortie de la chambre conique 4 de débit,on a prévu un diaphragme conique 7 partiellement voilant la sortie de la chambre de débit.4.Dans la partie inférieure de cette chambre de débit 4 est aménagée,directement au-dessus du diaphragme 7 conique,une soupape 5 présentant aussi une forme conique qui est prévue en vue du réglage de la largeur d'une lumière annulaire 6 formée entre la soupape 5 et la surface interne de la paroi de la chambre de débit 4,cette soupape 5 pouvant être déplacée verticalement par la maneuvre d'un bouton moleté 13 situé hors du récipient 1. Sous le récipient 1 se trouve un second récipient 8 accouplé à un vibrateur 11,ledit récipient 8 étant équipé d'une chambre annulaire d'ameublissement 9 enveloppant la diaphragme conique 7.Cette chambre d'ameublissement 9 s'achève d'un côté en une piste 10 communiquant avec l'entrée d'un cylindre vertical 12,dont la sortie se trouve directement au-dessus d'un évidement annulaire 15 aménagé dans la sole tournante 14 montée sur palier à roulement selon l'axe du récipient 1. A une certaine distance du cylindre 12 au-dessus de la sole tournante 14,on a prévu un racleur 16 d'écoulement de la poudre,dont la partie inférieure prend appui en glissant contre la paroi annulaire de l'évidement 15 aménagé dans la sole tournante 14.Ce racleur 16 d'écoulement de la poudre présente deux canaux de débit,dont l'un constitue un canal d'admission 17 de gaz et l'autre un canal d'éjection 18 du mélange de la poudre avec le gaz.Ces deux canaux 17 et 18 communiquent entre eux par un segment d'évidement annulaire 15,dont l'entrée du gaz entraîne la poudre et dont la sortie du mélange de poudre et de gaz sont dirigées tangentiellement à la sole tournante 14.

Le fonctionnement du doseur suivant l'invention est le suivant:

La poudre à partir du récipient 1 est dirigée à travers la grille 3 vers la chambre 4 conique de débit puis ensuite elle traverse la lumière 6 vers le diaphragme conique 7,d'où elle tombe dans la chambre d'ameublissement 9.Sous l'effet des vibrations du récipient 8,la poudre s'ameublie et elle est débitée par la piste 10 vers le cylindre 12,d'où elle est communiquée à l'évidement annulaire 15 de la sole tournante 14.Sous l'action du mouvement rotatif de la sole tournante 14,l'évidement annulaire 15 est totalement chargé par une couche uniforme de poudre sur la section entre le cylindre 12 et le racleur 16 d'écoulement.Par le racleur 16 d'écoulement la poudre est entraînée vers le canal d'éjection 18 par le gaz provenant du canal d'admission 17,puis ensuite elle est dirigée vers le pistolet à plasma non montré sur le dessin.

## Revendications

1. Doseur de poudres coopérant avec un dispositif technique à flux de gaz ionisé par un arc électrique de recouvrement avec un pistolet à plasma,comprenant un récipient vertical sous forme d'une chambre de débit cylindrique achevée en bas par une chambre de débit conique équipée à l'entrée d'un diaphragme conique voilant partiellement l'orifice d'éjection de la chambre de débit,ainsi qu'une sole tournante montée sur palier à roulement selon l'axe du récipient,caractérisé en ce que sous le récipient 1 est monté un second récipient 8 mis en mouvement vibratoire,formant autour du diaphragme conique 7 une chambre d'ameublissement 9 communiquant par l'intermédiaire d'une piste montante 10 avec un cylindre vertical 12,dont la sortie est située directement au-dessus d'un évidement annulaire 15 aménagé dans la sole tournante 14 située sous le récipient 8,et en ce qu'à une certaine distance du cylindre 12 se trouve un racleur 16 d'écoulement de la poudre dont la partie inférieure est conduite dans un évidement annulaire 15 de la sole tournante 14.

2. Doseur selon la revendication 1,caractérisé en ce que le racleur d'écoulement 16 de la poudre présente un canal d'admission 17 d'un gaz propulsif et un canal d'éjection 18 du mélange de poudres et de gaz,ces canaux étant entre eux en communication par l'intermédiaire d'un segment annulaire d'évidement 15 de la ole tournante 14.

Fig.1.

Fig. 2.

0208150

Fig.3.